# EUROPEAN PATENT APPLICATION

(11) **EP 4 525 064 A1**
(43) Date of publication of application: **19.03.2025**
(21) Application number: 24197218.1
(22) Date of filing: 29.08.2024
(51) Int. Cl.: H01M 4/04, H01M 4/133, H01M 4/134, H01M 4/1393, H01M 4/1395, H01M 4/36, H01M 4/38, H01M 4/587, H01M 10/0585, H01M 50/417, H01M 50/434, H01M 50/443, H01M 50/446, H01M 50/451, H01M 10/0525, H01M 10/0568, H01M 4/02

(54) **CYLINDRICAL LITHIUM-ION CELLS WITH SILICON-CARBON COMPOSITE ANODES AND A FABRICATION METHOD THEREOF**

(30) Priority: 15.09.2023 US 202363538503 P
(71) Applicant: Rincell Corporation, San Francisco, CA 94104 (US)
(72) Inventor: PARIKH, Jignesh, San Francisco, 94104 (US)
(74) Representative: Viering, Jentschura & Partner mbB Patent- und Rechtsanwälte

(57) **Abstract**

Disclosed is a cylindrical lithium-ion cell (100) with energy density of greater than 300 Wh/kg and greater than 850 Wh/L, and improved cycle life, charge/discharge rate, storage, and safety performances across a wide temperature range (-40 °C to + 60 °C). The cylindrical lithium-ion cell includes a densified anode electrode (102) and a densified cathode electrode (104) separated by two separator layers (106) [together termed as an electrode stack]. The electrode stack is spirally wound and is infused with an electrolyte formulation. The electrode stack has less than or equal to 3 % stack-level expansion at fully charged state. The densified anode electrode (102) comprises a composite anode electrode active material with a predefined ratio of 52.6-100% silicon-carbon such that SiₓC_{y}; x + y = 1, where x ranges between 0.45-0.55 and 0-47.4% graphite, and fabricated with an anode electrode formulation and a fabrication method.

## Description

### CROSS-REFERENCE TO PRIOR APPLICATION

This application claims the benefit of priority to a US provisional patent application No. 63538503, filed on 15-SEP-2023 at USPTO.

The entire contents of the provisional application, including any appendices, exhibits, and amendments filed therewith, are hereby incorporated by reference in its entirety.

### FIELD OF INVENTION

Various embodiments of the present disclosure relate to lithium-ion cells for batteries. More particularly, the invention relates to cylindrical lithium-ion cells based on silicon-carbon composite anode materials and a method of fabrication.

### BACKGROUND

State-of-the-art graphite-based lithium-ion cells have made significant advancements over the years, but they still face certain challenges that can affect their performance and wider adoption for all applications. Specifically, graphite, the current state-of-the-art anode material for lithium-ion batteries, has a limited practical specific capacity (~ 360 mAh/g) and this limits the energy density of the overall battery, impacting the driving range of electric vehicles and the runtime of portable electronics. While graphite anodes have good electrical conductivity, fast charging rates can lead to lithium plating, uneven lithium distribution, and increased risk of electrode degradation. Furthermore, graphite anodes experience reduced performance and safety issues, particularly at low temperatures (< -20 °C).

Silicon offers several benefits as an alternative anode material that can significantly enhance batteries' performance and energy storage capabilities. Silicon has a much higher practical specific capacity (> 2000 mAh/g) to store lithium ions compared to graphite and can absorb lithium ions quickly. This translates to a potential for lighter and more compact battery designs that can also support faster charging. However, there are several key issues and challenges associated with the use of silicon in lithium-ion cells.

The foremost challenge is silicon's propensity to undergo significant volume expansion (> 300%) during lithiation, commonly referred to as the "silicon swelling" problem. This expansion and contraction cause mechanical stress, leading to particle cracking, electrical contact loss, and reduced battery cycle life. Additionally, the continuous breakdown and reformation of the solid-electrolyte interface (SEI) layer on the silicon particle surface further exacerbates capacity loss and performance degradation.

Silicon-carbon composites are a class of anode active materials widely investigated for use as anode materials in lithium-ion cells. These composites combine the unique properties of silicon, such as its high capacity for lithium storage, with the stability and conductivity of carbon materials. Silicon-carbon composites aim to address the challenges associated with using silicon as a standalone anode material, such as volume expansion due to carbon's mechanical flexibility and stability that help accommodate the volume changes. The carbon matrix acts as a buffer, reducing the impact of silicon's expansion and contraction, which enhances the electrode's cycle life and overall durability. However, incorporation of silicon-carbon composites to anode electrode involves high technical barriers specifically in cylindrical cell form factor.

While silicon-carbon composite materials can mitigate volume expansion to some extent, for silicon dominant anode formulations, over multiple charge-discharge cycles, silicon can experience mechanical stress, leading to particle cracking, electrode delamination, and decreased cycle life. Furthermore, even moderate stack-level expansion (e.g., ~ 5%) can lower the volumetric energy density that can be achieved in cylindrical form factor due to hard cylindrical metal housing.

Silicon-carbon composite materials have high surface energy and tend to agglomerate, or cluster together, which reduces the effective surface area for lithium-ion interaction. Agglomeration can lead to poor electrode quality leading to poor electrode coating yield which is particularly problematic in cylindrical cell manufacturing that requires long strips of electrodes.

The parasitic reactions in silicon-based lithium-ion batteries can be a significant challenge, particularly at high temperatures. These side reactions lead to reduced battery efficiency, capacity fade, and even safety risks. At elevated temperatures, the susceptibility to these parasitic reactions is often exacerbated and can lead to cell malfunction via current interrupt device (CID) activation of cylindrical cells due to excessive gas generation.

The poor intrinsic conductivity of silicon (<10⁻³ S·cm⁻¹) leads to lower power performance, high heat generation, and significant safety issues due to longer current paths and lower heat dissipation rate in cylindrical cell format.

Limitations and disadvantages of conventional and traditional approaches will become apparent to one of skill in the art, through comparison of described systems with some aspects of the present disclosure, as set forth in the remainder of the present application and with reference to the drawings.

### SUMMARY OF INVENTION

In accordance with embodiments, a cylindrical lithium-ion cell with energy density of greater than 300 Wh/kg and greater than 850 Wh/L is provided. The cylindrical lithium-ion cell includes a cylindrical metal housing that contains electrolyte infused spirally wound electrode stack. The lithium-ion cell includes a densified anode electrode prepared according to an anode electrode formulation. The anode electrode formulation is composed of a specific mixture of a composite anode electrode active material, a binder mixture, and a conductive additive mixture. The composite anode electrode active material composition includes a 52.6-100% silicon-carbon composite SiₓC_{y}; x + y = 1, with x ranging between 0.45-0.55, and 0-47.4% graphite. The binder mixture is composed of 0-25% polyacrylic acid (PAA), 2.5-25% styrene-butadiene rubber (SBR), 2.5-25% carboxymethyl cellulose (CMC), and 0-25% alginate. The electrode conductive additive mixture encompasses 0-25% graphene, 0-25% single-wall carbon nanotubes (CNT), and 0-50% carbon black. The lithium-ion cell includes two separator layers sandwiched between the densified anode electrode and the densified cathode electrode. The electrolyte is infiltrated into the densified anode electrode, the densified cathode electrode and the two separators, wherein the electrolyte facilitates movement of ions between cathode and anode. The electrode stack has ≤3 % stack-level expansion at fully charged state.

In another embodiment, a method for fabricating a densified anode electrode for a cylindrical lithium-ion cell is provided. The method includes preparing an anode electrode formulation comprising a composite anode electrode active material, a conductive additive mixture and a binder mixture. The method includes making a slurry with uniformed dispersion of active materials, conductive additives, and binders according to the anode electrode formulation in water via utilization of industrial planetary mixers in the sequence of making binder solution (5-8 % solid) and then adding/mixing of conductive additives and adjusting the PH to 8-10 followed by adding/mixing active material (35-40% solid) for minimizing the occurrence of agglomerates and to yield appropriate rheological properties for slot-die coating and drying at > 15 m/min. The method further includes coating the anode electrode slurry on both sides of a current collector foil using slot-die coating and oven drying the coating. Thereafter, the method performs a calendaring process for obtaining a densified anode electrode utilizing calendaring machines equipped with hydraulic servo type gap adjustment and double pressing.

These and other features and advantages of the present disclosure may be appreciated from a review of the following detailed description of the present disclosure, along with the accompanying figures in which like reference numerals refer to like parts throughout.

### BRIEF DESCRIPTION OF THE DRAWINGS

The accompanying figures where like reference numerals refer to identical or functionally similar elements throughout the separate views and which together with the detailed description below are incorporated in and form part of the specification, serve to further illustrate various embodiments and to explain various principles and advantages all in accordance with the invention.
FIG. 1 is a diagram that illustrates an isometric cross-sectional view of a cylindrical lithium-ion cell 100, in accordance with an embodiment of the disclosure.
FIG. 2 is a diagram that illustrates a process 200 for fabricating a densified anode electrode 102 for a lithium-ion battery in accordance with an embodiment of the disclosure.
FIG. 3 is a diagram that illustrates a graphical view of discharge voltage profiles of an 18650-form factor cylindrical cell and a 21700-form factor cylindrical cell at 0.2 C rate and room temperature demonstrating 4.1 Ah and 5.8 Ah discharge capacities in the voltage window of 4.2 V-2.5 V, in accordance with an embodiment of the disclosure.
FIG. 4 is a diagram that illustrates a graphical view of discharge voltage characteristics of an 18650-form factor cylindrical cell (> 300 Wh/kg and > 850 Wh/L) with a 4.1 Ah discharge capacity at different C rates and room temperature in the voltage window of 4.2 V-2.5 V, in accordance with an embodiment of the disclosure.
FIG. 5 is a diagram that illustrates a graphical view of discharge voltage characteristics of a 21700-form factor cylindrical cell (> 300 Wh/kg and > 850 Wh/L) with a 5.8 Ah discharge capacity at different C rates and room temperature in the voltage window of 4.2 V-2.5 V, in accordance with an embodiment of the disclosure.
FIG. 6 is a diagram that illustrates a graphical view of charge rate performance of an 18650-form factor cylindrical cell (> 300 Wh/kg and > 850 Wh/L) with a 4.1 Ah discharge capacity at different C rates, in accordance with an embodiment of the disclosure.
FIG. 7 is a diagram that illustrates a graphical view of charge rate performance of a 21700-form factor cylindrical cell (> 300 Wh/kg and > 850 Wh/L) with a 5.8 Ah discharge capacity at different C rates, in accordance with an embodiment of the disclosure.
FIG. 8 is a diagram that illustrates a graphical view of discharge voltage characteristic of an 18650-form factor cylindrical cell (> 300 Wh/kg and > 850 Wh/L) with a 4.1 Ah discharge capacity at different temperatures (-40 °C to +60 °C) and 0.2 C rate, in accordance with an embodiment of the disclosure.
FIG. 9 is a diagram that illustrates a graphical view of cycle life performance of an 18650-form factor cylindrical cell (> 300 Wh/kg and > 850 Wh/L) with a 4.1 Ah discharge capacity at room temperature and 45 °C, in accordance with an embodiment of the disclosure.
FIG. 10 is a diagram that illustrates a graphical view of cycle life performance of an 18650-form factor cylindrical cell (> 300 Wh/kg and > 850 Wh/L) with a 4.1 Ah discharge capacity at room temperature at 2C charge rate, in accordance with an embodiment of the disclosure.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present disclosure.

### DETAILED DESCRIPTION

The following described limitation may be found in cylindrical lithium-ion cells based on silicon-carbon composite anode materials and a method of manufacturing same as disclosed herein.

Before describing in detail embodiments that are in accordance with the present disclosure, it should be observed that the embodiments reside primarily in combinations of a cylindrical lithium-ion cell with energy density of greater than 300 Wh/kg and greater than 850 Wh/L and a method for fabricating a densified anode electrode for the cylindrical lithium-ion cell. Accordingly, the cylindrical lithium-ion cell components and method operations have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.

Pursuant to various embodiment, the mass production of high-energy and high-power cylindrical lithium-ion cells, utilizing silicon-carbon composite materials to enhance electrochemical performance and safety, necessitates the consistent and high throughput production of high-quality anode electrodes and cell assembly and formation with an optimized cell design on a large scale.

The entire process of anode electrode manufacturing, including anode electrode slurry making according to anode electrode formulation, slot-die coating and drying, plays a crucial role in lithium-ion cell production. The quality and consistency of these electrodes directly influence the performance, safety, and cost-effectiveness of the final battery product. It is important to optimize anode electrode formulations to support efficient production with minimal waste and achieve the desired final electrode structure.

The cell design requires specific anode electrode structures, judicial selection of positive electrodes and separators, and specific electrolyte formulations to achieve high-energy and high-power density for cylindrical cell form factor.

The design of electrolytes with the appropriate combination of properties is critical for enabling the mass production of cylindrical cells based on silicon-carbon composite materials, while ensuring cell performance and safety. This includes formulating electrolytes that generate minimal gaseous byproducts during rapid formation operations to prevent CID activation due to a substantial increase in internal pressure resulting from gas generation. Furthermore, compatibility with silicon anodes, low viscosity, high ionic conductivity, superior thermal stability, and low flammability are desirable features to achieve high-power performance across a broad temperature range.

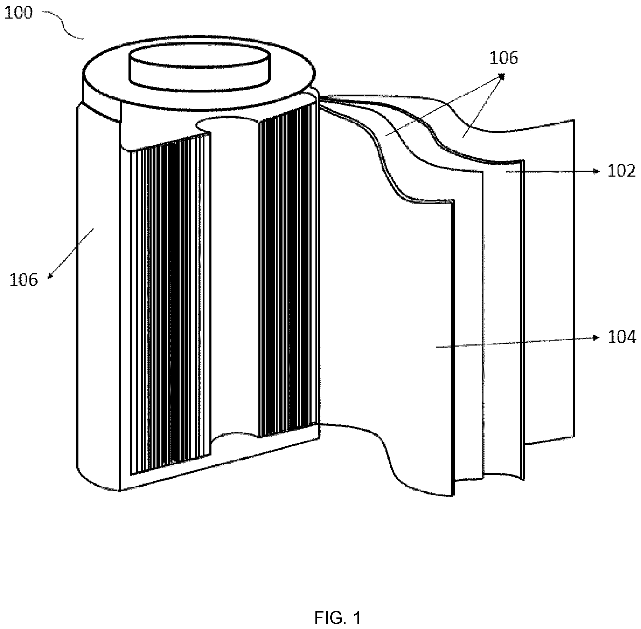

FIG. 1 is a diagram that illustrates an isometric cross-sectional view of a cylindrical lithium-ion cell 100 in accordance with an embodiment of the disclosure. As illustrated in FIG. 1, the cylindrical lithium-ion cell 100 includes a densified anode electrode 102, a densified cathode electrode 104, two separator layers 106 and a cylindrical metal housing 108 that houses the components (electrode stack). The densified anode electrode 102 and the densified cathode electrode 104 are composed of double-side coated current collector foils.

In an embodiment, the densified anode electrode 102 is prepared according to an anode electrode formulation. The anode electrode formulation includes a composite anode electrode active material, a conductive additive mixture and a binder mixture.

In an embodiment, the anode electrode formulation includes the composite anode electrode active material with a predefined ratio of 52.6-100% silicon-carbon composite SixCy, where x + y = 1, and x ranges between 0.45-0.55, along with 0-47.4% graphite. This composition accounts for 93-95.9% of the anode electrode formulation. The predefined ratio contributes to high energy density, optimal electrochemical performance, and stability during charge-discharge cycling.

In an embodiment, the anode electrode formulation includes the conductive additive mixture that includes 0-25% graphene, 0-25% single-wall carbon nanotubes (CNT), and 0-50% carbon black. The conductive additive mixture is included into the anode electrode formulation in the range of 0.1-1%. The conductive additives enhance the overall electrical conductivity of the densified anode electrode 102, thereby mitigating the inherent conductivity challenges associated with silicon.

In an embodiment, the anode electrode formulation includes the binder mixture that includes 0-25% polyacrylic acid (PAA), 2.5-25% styrene- butadiene rubber (SBR), 2.5-25% carboxymethyl cellulose (CMC), and 0-25% alginate. The binder mixture is included into the anode electrode formulation in the range of 4-6%.

Various combination of these binders can hold the silicon particles together while ensuring adhesion to the current collector foil to maintain the mechanical integrity of the densified anode electrode 102 during volume expansion and contraction that occurs during cell cycling.

In an embodiment, both sides of the current collector foil of the densified anode electrode 102 is coated with an anode electrode slurry. The anode electrode slurry is prepared according to a specific slurry making process. In an embodiment, the anode electrode slurry consists of a uniform distribution of active materials, binders, and conductive additives, in accordance with the anode electrode formulation, in water.

In an embodiment, the densified anode electrode 102 has a density of 1.6-1.75 g/cm³ and 30% porosity and leads to ≤ 3 % stack-level expansion at fully charged state. This optimized anode electrode structure provides an ideal balance between cell energy density and power density.

The densified cathode electrode 104 includes a mixture of active materials, consisting of 25-50% lithium nickel manganese cobalt oxide LiNiₓMn_{y}Co_{1-x-y}O₂, 0.9 < x < 1 and 50-75% LiNiₓMn_{y}Co_{1-x-y}O₂, 0.8 < x < 0.9. The density of the densified cathode electrode 104 is maintained at > 3.5 mg/cm³. This facilitates high electrode densification while ensuring stability of electrode structure, thereby providing a high specific capacity (> 220 mAh/g). The combination of high gravimetric and volumetric energy densities (> 300 Wh/kg and > 850 wh/L) in cylindrical cell form factors is achievable due to high densification of both anode and cathode electrodes, coupled with minimal stack-level expansion.

The two separator layers 106 disposed between the densified anode electrode 102 and the densified cathode electrode 104 may include inorganic coatings. The inorganic coatings may include ceramic or boehmite to improve electrolyte wettability and thermal properties.

In accordance with an embodiment of the disclosure, the electrolyte infiltrates into the densified anode electrode 102, the densified cathode electrode 104, and the two separator layers (together know as electrode stack), wherein the electrolyte facilitates movement of ions between cathode and anode.

In an embodiment, the electrolyte comprises a mixture of lithium salt, organic solvents, and salt-type additives to generate a stable solid electrolyte interface (SEI). Further, the electrolyte has conductivity > 10.5 mS/cm at 25 °C.

In an embodiment, the electrolyte composition is developed by preparing 1.0-1.5 M of a salt mixture with lithium hexafluorophosphate (LiPF₆) and Lithium bis(fluorosulfonylimide) (LiFSI) in specific molar ratios ranging from 40% -100% LiPF₆. Subsequently, the salt mixture is dissolved in a blend of organic solvents which includes 15-25 wt. % of ethylene carbonate (EC), 35-50 wt. % of diethyl carbonate (DEC), 25-35 wt. % of ethyl methyl carbonate (EMC), and 5-10 wt. % of fluoroethylene carbonate (FEC) with specified weight percentages.

Thereafter, 1.5-2.5 wt. % of salt-type additives are introduced to further enhance the properties of the electrolyte. The salt-type additives include lithium bis(oxalato)borate (LiBOB), lithium difluoro(oxalato)borate (LiDFOB), lithium difluoro(oxalato)phosphate (LiDFOP), lithium fluoromalonato(difluoro)borate (LiFMDB). These mixtures of lithium salt, solvent and salt type additives generate mechanically and thermally stable SEI that can withstand expansion of silicon-carbon composite particles and suppress occurrence of parasitic reactions.

In combination, the low viscosity and high ionic conductivity of electrolyte formulations, low resistance of SEI formed on the silicon-carbon composite particles, and anode electrode structure and composition can overcome the poor intrinsic conductivity issues associated with silicon-dominant anode formulation. High power performance and cell operation across a broad temperature range can be achieved for high-energy cylindrical cells. These features also enable fast charge capabilities in cylindrical cell form factor taking advantage of inherent ability of silicon to absorb lithium quickly.

In an exemplary embodiment, a cylindrical lithium-ion cell with an 18650-form factor has discharge capacity of ≥ 4.1 Ah at 0.2 C discharge rate when discharge from 4.2 V to 2.5 V and energy density exceeding 300 Wh/kg and 850 Wh/L. The cell discharge capacity yield at 3 C discharge rate is > 87% when discharge from 4.2 V to 2.5 V. The cylindrical lithium-ion cell with 18650-form factor can be charged at 3 C rate allowing 0% to 80% charge in less than 20 minutes.

The cylindrical lithium-ion cell with 18650-form factor can be cycled (2.5 V-4.2V) at a charge rate of 0.3 C for >800 and >700 cycles under room temperature and 45 °C respectively, before reaching the discharge capacity yield of 80%. Similarly, it can also be cycled at charge rate of 2 C for >500 cycles at room temperature. The cylindrical lithium-ion cell with 18650-form factor can be discharged at -40 °C at 0.2 C rate with capacity yield of > 40 % in the voltage window of 4.2 V to 2.5 V.

In accordance with another exemplary embodiment, a cylindrical lithium-ion cell with 21700-form factor has discharge capacity of > 5.8 Ah at 0.2 C discharge rate when discharge from 4.2 V to 2.5 V and energy density above 300 Wh/kg and 850 Wh/L. Similar to the 18650-form factor, the cylindrical lithium-ion cell with 21700-form factor exhibit > 87 % discharge capacity yield at 3 C discharge rate when discharge from 4.2 V to 2.5 V and can be charged at 3 C rate allowing 0% to 80% charge in less than 20 minutes.

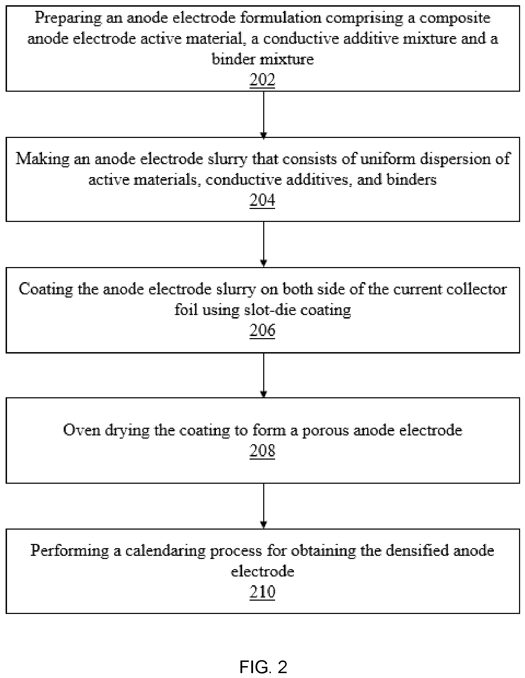

FIG. 2 is a diagram that illustrates a process 200 for fabricating the densified anode electrode 102 for the cylindrical lithium-ion cell 100 with energy density greater than 300 Wh/kg and greater than 850 Wh/L in accordance with an embodiment of the disclosure.

As illustrated in FIG. 2, operation 202 includes preparing an anode electrode formulation comprising a composite anode electrode active material, a conductive additive mixture and a binder mixture.

In an embodiment, an anode electrode formulation includes the composite anode electrode active material in the range of 93-95.9%, the conductive additive mixture in the range of 0.1-1%, and the binder mixture in the range of 4-6%.

The composite anode electrode active material includes a predefined ratio of 52.6-100% silicon-carbon composite SixCy; x + y = 1, with x ranging between 0.45-0.55, and 0-47.4% graphite.

The conductive additive mixture includes 0-25% graphene, 0-25% single-wall carbon nanotubes (CNT), and 0-50% carbon black. Similarly, the binder mixture includes 0-25% polyacrylic acid (PAA), 2.5-25% styrene-butadiene rubber (SBR), 2.5-25% carboxymethyl cellulose (CMC), 0-25% alginate, and combinations thereof.

Operation 204 includes preparing an anode electrode slurry that consists of uniform dispersion of active materials, conductive additives, and binders according to the anode electrode formulation in water prepared via utilization of industrial planetary mixers.

In an embodiment, the anode electrode slurry making process includes dispersion of active materials, conductive additives, and binders in water via utilization of industrial planetary mixers. The specific mixing sequence to achieve uniform dispersion of solid materials in the water includes premixing of the binders in water to make solution with 5-8% solid content and then introduction of the conductive additives and vigorous mixing (> 4000 rpm) followed by adjusting the PH of the solution to 8-10. Finally, the active materials are introduced, and the mixing is performed at 2500 rpm followed by 4000 rpm after adjusting the solid content in the slurry to 35-40% via addition of water. This mixing method minimizes the occurrence of agglomerates and gas generation and yield right balance of solid content, viscosity, and other rheological properties for slurry making and slot-die coating and drying at a speed appropriate for mass production (> 15 m/min).

Operation 206 includes coating the anode electrode slurry prepared according to anode electrode formulation on both sides of a current collector foil using a slot-die technique.

Operation 208 includes oven drying coating of the anode electrode slurry to form a porous anode electrode.

Operation 210 includes performing a calendaring process for obtaining the densified anode electrode 102 utilizing calendaring machines equipped with hydraulic servo type gap adjustment and double pressing.

In an embodiment, the calendaring process produces a densified anode electrodes with a density of 1.6-1.75 g/cm³ and porosity in the range of 25 to 30%. This optimized electrode structure is a result of controlled compressibility electrodes with minimum rebound in electrode thickness after calendaring made possible by both compressing method and anode electrode formulation.

In an exemplary embodiment, an anode electrode formulation includes 65% silicon-carbon composite materials (SixCy; x + y = 1 with x=0.45), 25 % graphite, 2.5 % alginate, 2.5 % CMC, 4% carbon black and 1% CNT.

In an exemplary embodiment, a densified anode electrode with a density of 1.65 g/cm³ and 30% porosity can be produced following the process disclosed herein at a loading of 6 mg/cm². The loading refers to an amount of the composite active material, the conductive additive mixture and the binder mixture applied per unit area of the current collector foil. This high anode electrode densification for silicon-dominant composition along with low stack-level expansion (2.5 %) during lithiation enables assembly of cylindrical lithium-ion cell with high gravimetric and volumetric energy densities (> 300 Wh/kg and > 850 wh/L).

In an exemplary embodiment, a densified cathode electrode includes a mixture of 25% lithium nickel manganese cobalt oxide LiNiₓMn_{y}Co_{1-x-y}O₂, 0.9 < x < 1, 0.9 < x < 1 and 75% LiNiₓMn_{y}Co_{1-x-y}O₂, 0.8 < x < 0.9 as active materials and density of > 3.5 mg/cm³.

In an exemplary embodiment, an electrolyte comprises a 1.5 M lithium salt mixture consisting of combination of lithium hexafluorophosphate (LiPF₆) and Lithium bis(fluorosulfonylimide) (LiFSI) in molar ratio of 3 to 2. The organic solvent mixture includes 25 wt. % of ethylene carbonate (EC), 25 wt. % of diethyl carbonate (DEC), 35 wt. % ethyl methyl carbonate (EMC), and 15 wt. % of fluoroethylene carbonate (FEC). The salt type additive mixture is composed of 0.5 wt. % of lithium bis(oxalato)borate (LiBOB) and 0.5 % of lithium fluoromalonato(difluoro)b orate (LiFMDB).

The structure and composition of the densified anode electrode of this exemplary embodiment together with low viscosity and high ionic conductivity of electrolyte formulation enable faster ion and electron transport resulting in superior power performance.

In accordance with an exemplary embodiment, a cylindrical lithium-ion cell with an 18650-form factor with 4.1 Ah discharge capacity and a 21700-form factor with 5.8 Ah discharge capacity can be assembled.

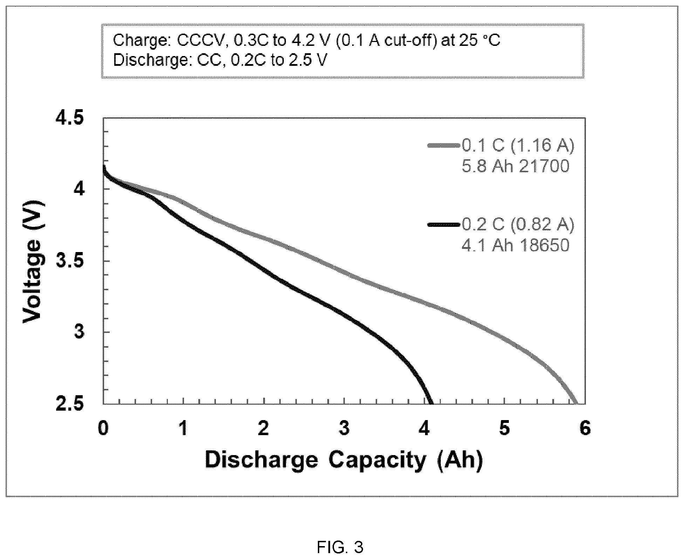

FIG. 3 is a diagram that illustrates a graphical view of discharge voltage profiles of the 18650-form factor cylindrical cell and the 21700-form factor cylindrical cell at 0.2 C rate and room temperature demonstrating 4.1 Ah and 5.8 Ah discharge capacities in the voltage window of 4.2 V-2.5 V, in accordance with an embodiment of the disclosure.

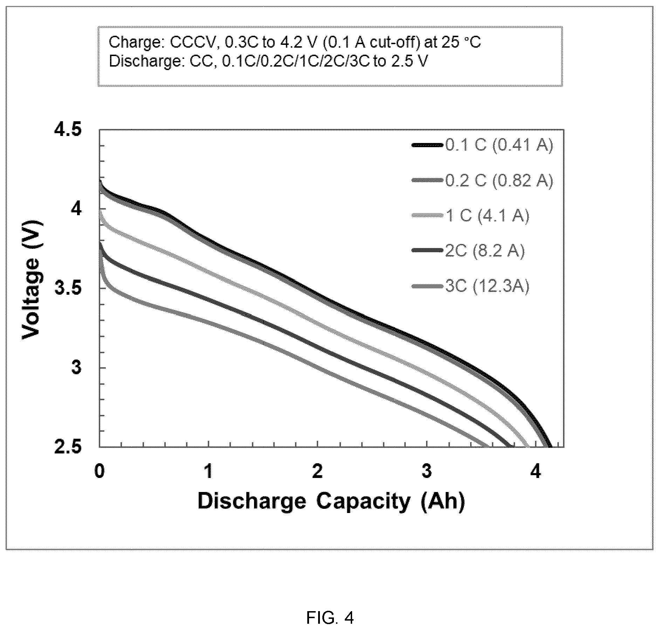

FIG. 4 is a diagram that illustrates a graphical view of discharge voltage characteristics of an 18650-form factor cylindrical cell (> 300 Wh/kg and > 850 Wh/L) with 4.1 Ah discharge capacity at different C rates and room temperature in the voltage window of 4.2 V-2.5 V, in accordance with an embodiment of the disclosure.

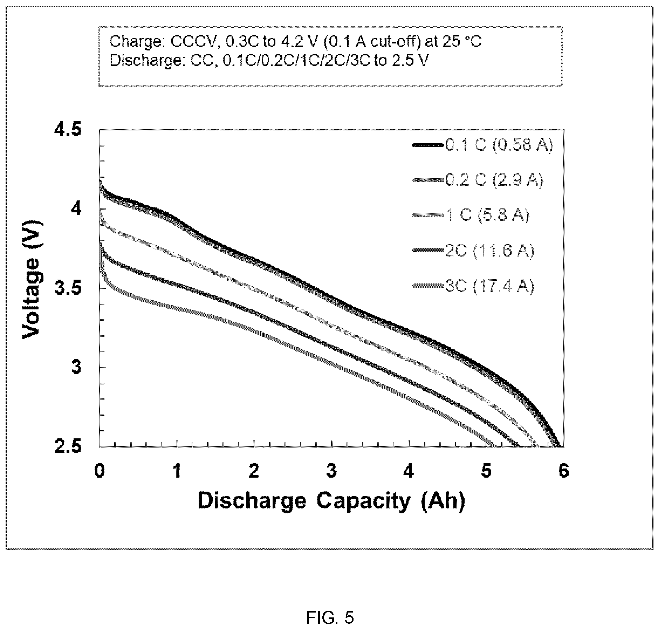

FIG. 5 is a diagram that illustrates a graphical view of discharge voltage characteristics of a 21700-form factor cylindrical cell (> 300 Wh/kg and > 850 Wh/L) with a 5.8 Ah discharge capacity at different C rates and room temperature in the voltage window of 4.2 V-2.5 V, in accordance with an embodiment of the disclosure.

The 18650-form factor cell and the 21700-form factor cell can yield > 87% capacity retention at 3C rate illustrating superior power capability for high-energy cylindrical cells (> 300 Wh/kg and > 850 wh/L) based on silicon-carbon composite dominant anode.

The superior power performance is further exemplified by fast charge performance of the high energy (> 300 Wh/kg and > 850 wh/L) 18650-form factor cell and 21700-form factor cell.

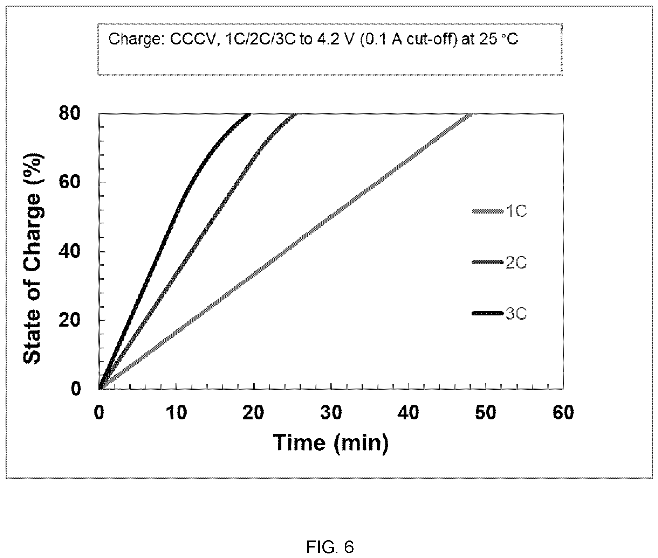

FIG. 6 is a diagram that illustrates a graphical view of charge rate performance of an 18650-form factor cylindrical cell (> 300 Wh/kg and > 850 Wh/L) with a 4.1 discharge capacity at different C rates, in accordance with an embodiment of the disclosure. In an embodiment, the 18650-form factor cylindrical cell can be charged at 3 C rate allowing 0% to 80% charge in less than 20 minutes.

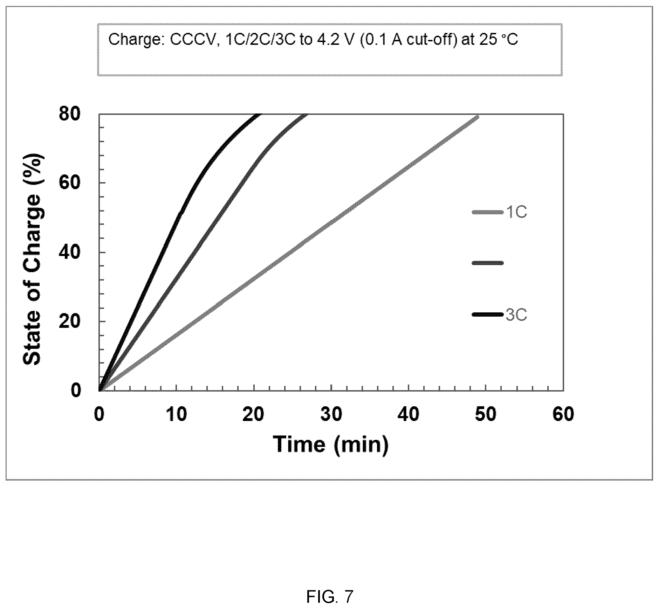

FIG. 7 is a diagram that illustrates a graphical view of charge rate performance of a 21700-form factor cylindrical cell (> 300 Wh/kg and > 850 Wh/L) with a 5.8 discharge capacity at different C rates, in accordance with an embodiment of the disclosure. In an embodiment, the 21700-form factor cylindrical cell can be charged at 3 C rate allowing 0% to 80% charge in less than 20 minutes.

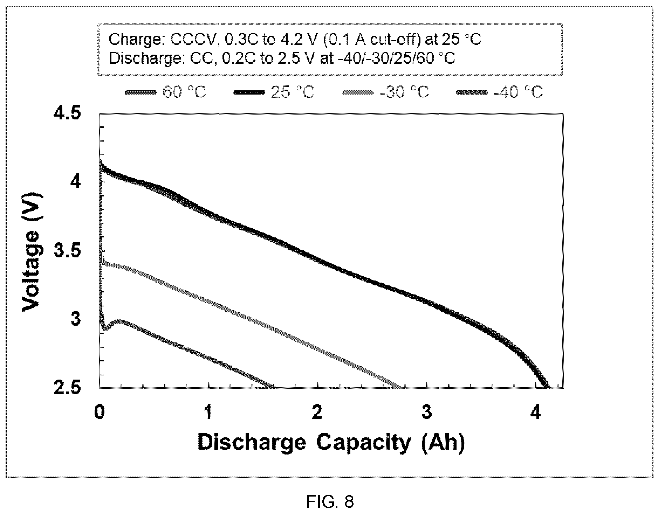

The benefits of this disclosure further include enabling operation of high-energy cylindrical cells (> 300 Wh/kg and > 850 wh/L) across a wide temperature range (-40 °C to +60 °C). For example, an 18650-form factor cylindrical cell with a 4.1 Ah discharge capacity can yield > 40 % of capacity at -40 °C and 0.2 C discharge rate when discharge from 4.2V to 2.5V as illustrated in FIG. 8.

In contrast, state-of-the-art high energy cells are not functional at ultra-low temperatures (< -30 °C). This excellent low-temperature performance originates from shorter diffusion path afforded by a densified anode electrode with coating thickness of only 30 µm for a loading of 6 mg/cm² prepared in accordance with an exemplary embodiment of the disclosure This is further aided by low viscosity and high ionic conductivity of electrolyte formulations of this disclosure. The high temperature stability is exemplified by excellent high temperature storage performance. A minimum increase in impedance (< 5%) can be observed when the high-energy cylindrical cells are stored at 60 °C for one week at 100% SOC. Furthermore, > 90% capacity retention and > 95% capacity recovery can be achieved after cell storage at above mention conditions.

In another exemplary embodiments, a negative electrode formulation with 65% silicon-carbon composite materials (SixCy; x + y = 1 with x=0.45), 25 % graphite, 2.5 % PAA, 2.5 % CMC, 3% carbon black and 2% CNT can be used to produce a highly densified anode electrodes (> 1.6 g/cm³) with lower stack level expansion (< 3%).

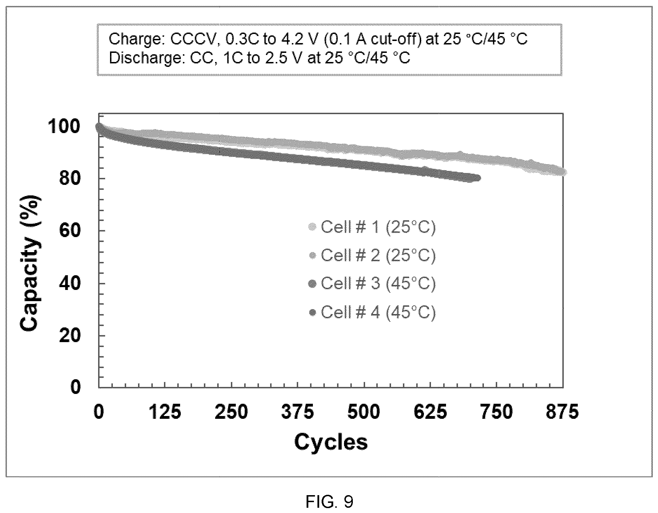

These electrodes can be used to make cylindrical cells with > 300 Wh/kg and > 850 wh/L gravimetric and volumetric energy densities (e.g. 18650-form factor cell with 4.1 Ah discharge capacity) and these cylindrical cells show excellent cycle life performance at both room and elevated (45 °C) temperatures when cycled at 0.3C/1C charge discharge rate from 4.2V to 2.5V (as shown in FIG. 9). At room temperature and 45 °C cells can be cycled >800 and >700 cycles respectively before reaching the discharge capacity yield of 80% at first cycle capacity.

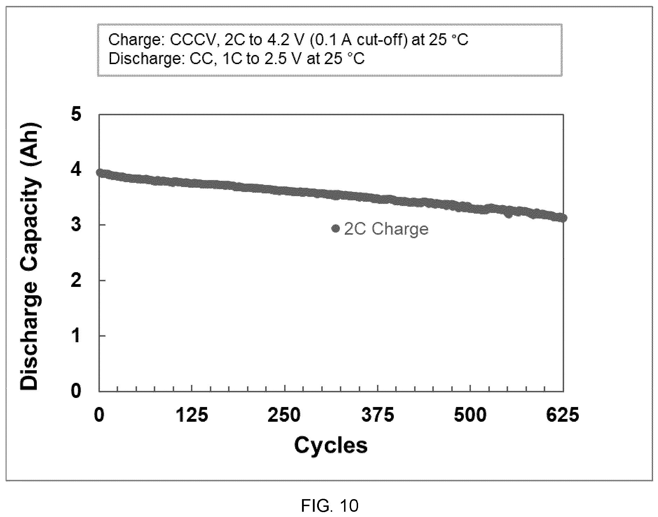

In some embodiments, a negative electrode formulation with 55% silicon-carbon composite materials (SixCy; x + y = 1 with x=0.55), 35 % graphite, 2.5 % SBR or 2.5 % PAA, 2.5 % CMC, 3% carbon black and 2% CNT enables production of gravimetric and volumetric energy densities (> 300 Wh/kg and > 850 wh/L) in cylindrical cell form factors. These cells show excellent cycle life performance at a fast charge rate as demonstrated by cycle life performance of an 18650-form factor cell with a 4.1 Ah discharge capacity cycled at 2C charge and 1C discharge rate from 4.2V to 2.5V (as shown in FIG. 10). The 18650-form factor cylindrical cells can be cycled >500 cycles before reaching the discharge capacity yield of 80% at first cycle capacity.

The disclosure facilitates the mass production of cylindrical cells employing silicon-carbon composite materials, ensuring optimal cell performance and safety. The densified anode electrode production process includes a mixing method that minimizes the occurrence of agglomerates and gas generation and yield right balance of solid content, viscosity, and other rheological properties for slot-die coating and drying at a speed appropriate for mass production (> 15 m/min). The electrolyte formulations with a precise combination of properties allow faster formation process suitable for mass production due to minimal gaseous byproducts generation during rapid formation operations, preventing the activation of current interrupt device (CID).

High-energy and high-power lithium-ion cylindrical cells can be mass produced implementing anode electrode formulations and cell design features described herein and these cells can deliver exceptional electrochemical performance across a wide temperature range.

## Claims

1. A cylindrical lithium-ion cell (100), comprising:
a densified anode electrode (102);
a densified cathode electrode (104);
two separator layers (106) sandwiched between the densified anode electrode (102) and the densified cathode electrode;
an electrolyte infiltrated into the densified anode electrode, the densified cathode electrode and the two separator layers, wherein the electrolyte facilitates movement of ions between cathode and anode; and
a cylindrical metal housing (108) that houses the densified anode electrode (102), the densified cathode electrode (104), the two separator layers (106) and the electrolyte,
wherein the densified anode electrode (102) is prepared according to an anode electrode formulation comprising a composite anode electrode active material, a conductive additive mixture and a binder mixture,
wherein the composite anode electrode active material comprises a predefined ratio of 52.6-100% silicon-carbon composite SixCy; x + y = 1, with x ranging between 0.45-0.55, and 0-47.4% graphite,
wherein the binder mixture is composed of 0-25% polyacrylic acid (PAA), 2.5-25% styrene-butadiene rubber (SBR), 2.5-25% carboxymethyl cellulose (CMC), and 0-25% alginate,
wherein the conductive additive mixture encompasses 0-25% graphene, 0-25% single-wall carbon nanotubes (CNT), and 0-50% carbon black,
the cylindrical lithium-ion cell has an energy density of greater than 300 Wh/kg and greater than 850 Wh/L and the electrode stack has ≤3 % stack-level expansion at fully charged state.

2. The cylindrical lithium-ion cell (100) of claim 1, wherein the densified cathode electrode (102) comprises a mixture of 25-50% lithium nickel manganese cobalt oxide LiNiₓMn_{y}Co_{1- x-y}O₂, 0.9 < x < 1 and 50-75% LiNiₓMn_{y}Co_{1-x-y}O₂, 0.8 < x < 0.9 as active materials and coat density of > 3.5 mg/cm³.

3. The cylindrical lithium-ion cell (100) of claim 1, wherein the two separator layers (106) include inorganic coatings, wherein the inorganic coatings consist of ceramic or boehmite.

4. The cylindrical lithium-ion cell (100) of claim 1, wherein the electrolyte has conductivity > 10.5 mS/cm at 25 °C and comprises a composition of a salt mixture of lithium salt, organic solvents, and salt-type additives to generate a stable solid electrolyte interface (SEI) designed for silicon anode material that undergoes substantial volume changes during cycling.

5. The cylindrical lithium-ion cell (100) of claim 1, wherein the cylindrical lithium-ion cell (100) is an 18650-form factor cell with a discharge capacity of ≥ 4.1 Ah at 0.2 C discharge rate when discharge from 4.2 V to 2.5 V.

6. The cylindrical lithium-ion cell (100) of claim 5, wherein a discharge capacity yield at 3 C discharge rate is > 87% when discharge from 4.2 V to 2.5 V.

7. The cylindrical lithium-ion cell (100) of claim 5, wherein the 18650-form factor cell can be charged at 3 C rate allowing 0% to 80% charge in less than 20 minutes.

8. The cylindrical lithium-ion cell (100) of claim 5, wherein the 18650-form factor cell can be cycled between lower and upper voltage of 2.5 V and 4.2 V, and at a charge rate of 2C for > 500 cycles before reaching the discharge capacity yield of 80% at 0.2 C discharge rate.

9. The cylindrical lithium-ion cell (100) of claim 5, wherein the 18650-form factor cell can be discharged at -40 °C at 0.2 C rate with capacity yield of > 40 % in the voltage window of 4.2 V to 2.5 V.

10. The cylindrical lithium-ion cell (100) of claim 1, wherein the cylindrical lithium-ion cell (100) is a 21700-form factor cell with a discharge capacity of ≥ 5.8 Ah at 0.2 C discharge rate when discharge from 4.2 V to 2.5 V.

11. The cylindrical lithium-ion cell (100) of claim 10, wherein a discharge capacity yield at 3 C discharge rate is > 87% when discharge from 4.2 V to 2.5 V.

12. The cylindrical lithium-ion cell (100) of claim 10, wherein the 21700-form factor cell can be charged at 3 C rate allowing 0% to 80% charge in less than 20 minutes.

13. The cylindrical lithium-ion cell (100) of claim 10, wherein the 21700-form factor cell can be cycled between lower and upper voltage of 2.5 V and 4.2 V, and at a charge rate of 2C for > 500 cycles before reaching the discharge capacity yield of 80% at 0.2 C discharge rate.

14. The cylindrical lithium-ion cell (100) of claim 10, wherein the 21700-form factor cell can be discharged at -40 °C at 0.2 C rate with capacity yield of > 40 % in the voltage window of 4.2 V to 2.5 V.

15. A method for fabricating a densified anode electrode (102) for a cylindrical lithium-ion cell (100), the method comprising:
preparing an anode electrode formulation comprising a composite anode electrode active material, a conductive additive mixture and a binder mixture;
preparing an anode electrode slurry with uniform dispersion of active materials, conductive additives, and binders according to the anode electrode formulation in water via utilization of industrial planetary mixers;
wherein the anode electrode formulation includes 93-95.9% of the composite anode electrode active material, the composite anode electrode active material including a predefined ratio of 52.6-100% silicon-carbon composite SixCy; x + y = 1, with x ranging between 0.45-0.55, and 0-47.4% graphite;
wherein the anode electrode formulation includes 0.1-1% of the conductive additive mixture, the conductive additive mixture comprising graphene, single-wall carbon nanotubes (CNT), and carbon black, and combinations thereof;
wherein the anode electrode formulation includes 4-6% of the binder mixture comprises, the binders mixture comprising polyacrylic acid (PAA), styrene-butadiene rubber (SBR), carboxymethyl cellulose (CMC), alginate, and combinations thereof;
Coating the anode electrode slurry on both side of a current collector foil using slot-die coating;
oven drying the coating to form a porous anode electrode; and
performing a calendaring process for obtaining a densified anode electrode utilizing calendaring machines equipped with hydraulic servo type gap adjustment and double pressing.

16. The method of claim 15, wherein the anode electrode slurry comprises dispersion of active materials, conductive additives, and binders according to the anode electrode formulation in water via utilization of industrial planetary mixers in the sequence of making binder solution (5-8 % solid) and then adding/mixing of conductive additives and adjusting the PH to 8-10 followed by adding/mixing active material (35-40% solid) for minimizing the occurrence of agglomerates and obtaining appropriate rheological properties for slot-die coating and drying at > 15 m/min.

17. The method of claim 16, wherein loading of the densified anode electrode (102) is at 3-8 mg/cm².

18. The method of claim 15, wherein the calendaring process employs a double-sided coated electrode rolls on a calendaring machine equipped with a constant pressure and gap adjustment mode.

19. The method of claim 18, wherein the calendaring process produces the densified anode electrode (102) with a density of 1.6-1.75 g/cm³ and porosity in the range of 25 to 30%.
